# EUROPÄISCHE PATENTSCHRIFT

(11) **EP 1 811 592 B1**
(45) Veröffentlichungstag und Bekanntmachung des Hinweises auf die Patenterteilung: **20.08.2008**
(21) Anmeldenummer: 07001144.0
(22) Anmeldetag: 19.01.2007
(51) Int. Cl.: H01M 2/20, H01M 2/34

(54) **Batterie**
Battery
Batterie

(30) Priorität: 20.01.2006 DE 102006003114; 31.03.2006 EP 06006817
(43) Veröffentlichungstag der Anmeldung: 25.07.2007
(73) Patentinhaber: Torqeedo GmbH, 82319 Starnberg (DE)
(72) Erfinder: Böbel, Friedrich, 82547 Eurasburg (DE)
(74) Vertreter: Gellner, Bernd

(56) Entgegenhaltungen:
- EP-A- 0 661 769
- WO-A-20/05046017
- DE-A1- 4 423 199
- US-B1- 6 331 764

## Beschreibung

Die Erfindung betrifft eine Batterie mit mindestens einer Batteriezelle, mit zwei Batteriepolen und stromleitenden Verbindungen zwischen der oder den Batteriezellen und den Batteriepolen.

Eine Lithium-Mangan-Zelle hat beispielsweise eine Kapazität von 1,6 Ah bei einer Nennspannung von 3,7 V. Je nach Anwendungsgebiet müssen daher in der Praxis mehrere Lithium-Mangan-Zellen parallel und seriell zu einer Batterie zusammengeschaltet geschaltet werden, um eine gewünschte Sollspannung an den Batteriepolen und eine gewünschte Kapazität zu erreichen.

Lithium-Mangan-Batterien sind besonders hochstromfest, das heißt, sie können auch hohe Ströme zur Verfügung stellen, ohne dass die Batteriespannung zusammenbricht Lithium-Mangan-Batterien reagieren elektrochemisch relativ träge, so dass selbst bei Fehtfunktionen keine kritischen Temperaturerhöhungen auftreten, die bei anderen Lithium-lonen-Akkus zum Teil Sicherheitsprobleme mit sich bringen können. Lithium-Mangan-Batterien sind daher grundsätzlich sicher.

Die Batteriespannung ist allerdings vom Ladezustand der Batterie abhängig: Mit fortschreitender Entladung der Batterie sinkt die Batteriespannung langsam ab. Werden zwei jeweils aus mehreren Lithium-Mangan-Zellen bestehende Batterien, die unterschiedlich stark geladen sind und folglich unterschiedliche Klemmenspannungen aufweisen, parallel geschaltet, fließt zwischen den Batterien ein Ausgleichsstrom.

Lithium-Mangan-Batterien haben einen sehr geringen Innenwiderstand von etwa 1 mOhm. Unterscheiden sich daher bei der oben genannten Parallelschaltung zweier Batterien deren Batteriespannungen um beispielsweise 10 Volt, so fließt aufgrund des sehr geringen Innenwiderstands ein Ausgleichsstrom von 10000 A, der ein hohes Gefahrenpotential darstellen kann.

Bisher werden daher Batterien mit hochstromfähigen Lithium-Zellen, die mit Batterien des gleichen Typs zusammengeschaltet werden sollen, mit speziellen Ladegeräten präzise in einen definierten Ladezustand gebracht, so dass beim Verbinden zweier solcher Batterien kein oder nur ein sehr geringer Ausgleichsstrom fließt. Das Laden der Batterien wird dadurch sehr aufwändig und kann nur von Spezialisten durchgeführt werden.

Zudem können solche hochstromfähigen Batterien bisher aus Sicherheitsgründen nicht als separates Modul an Endverbraucher verkauft werden, da beispielsweise nicht auszuschließen ist, dass dieser zwei unterschiedlich stark geladene Batterien in unzulässigerweise zusammenschaltet.

Die DE 44 23 199 A1 beschreibt ein Batteriepaket mit internen Batterien und externen Batteriepolen zum Anschließen eines Verbrauchers und mit einer Steuerschaltung, welche die Batteriepole nur dann mit den internen Batterien verbindet, wenn ein Verbraucher an die Batteriepole angeschlossen ist. Der ordnungsgemäße Anschluss eines Verbrauchers an die Batteriepole wird über einen separaten Signaleingang am Batteriepaket festgestellt.

Die Erfindung hat sich daher die Aufgabe gestellt, die Ausgleichsströme beim Zusammenschalten von zwei oder mehr Batterien zu begrenzen.

Insbesondere ist es Aufgabe vorliegender Erfindung, eine mehrere hochstromfähige Lithium-Zellen aufweisende Batterie zu entwickeln, wobei die oben genannten Probleme nicht auftreten.

Diese Aufgabe wird durch eine Batterie der eingangs genannten Art gelöst, wobei eine Sicherheitsschaltung vorgesehen ist, welche in der Verbindung zwischen der oder den Batteriezellen und einem der Batteriepole ein strombegrenzendes Element aufweist und wobei parallel zu dem strombegrenzenden Element ein Überbrückungsschalter angeordnet ist, und wobei eine Steuereinrichtung vorgesehen ist, welche den Überbrückungsschalter schließt, wenn der zwischen der oder den Batteriezellen und einem der Batteriepole fließende Strom einen vorgegebenen Minimalstrom unterschreitet.

Die erfindungsgemäße Batterie stellt eine Gleichstromversorgung dar, die allen gebotenen Sicherheitsanforderungen gerecht wird. Die erfindungsgemäße Sicherheitsschaltung gewährleistet, dass selbst bei Fehlbedienungen keinerlei sicherheitsbedenkliche Situationen auftreten. Die Batterie kann daher grundsätzlich auch von einem Laien an einen Stromverbraucher angeschlossen werden. Erst die Erfindung ermöglicht es damit, eine Lithium-basierende Hochleistungsbatterie auch als separates Modul, das heißt, nicht fest mit einem Stromverbraucher verbunden, an Endabnehmer zu vertreiben.

Erfindungsgemäß ist dazu eine Sicherheitsschaltung vorgesehen, welche in der Verbindungsleitung zwischen den Batteriezellen und einem der Batteriepole einen Überbrückungsschalter, insbesondere ein MOSFET, umfasst. Parallel zu diesem Überbrückungsschalter ist ein strombegrenzendes Element geschaltet.

Ohne die erfindungsgemäße Sicherheitsschaltung können bei einem nicht sachgerechten Parallelschalten zweier Batterien auf Lithium-Basis die eingangs erwähnten hohen Ausgleichsströme auftreten. Zur Vermeidung dieser Ausgleichsströme ist in der Sicherheitsschaltung ein strombegrenzendes Element vorgesehen, welches zunächst zwischen die Batteriezelle(n) und einen der Batteriepole geschaltet ist Der parallel zu dem strombegrenzenden Element angeordnete Überbrückungsschalter ist in diesem Zustand geöffnet.

Wird eine erfindungsgemäß so ausgerüstete Batterie mit einer zweiten Batterie mit unterschiedlicher Klemmenspannung parallel geschaltet, so fließt der Ausgleichsstrom zunächst über das strombegrenzende Element. Erst wenn der Ausgleichsstrom einen vorgegebenen Minimalwert unterschreitet, schließt die Sicherheitsschaltung erfindungsgemäß den parallel zu dem strombegrenzenden Element angeordneten Überbrückungsschalter, so dass der Strom über diesen Leitungszweig fließt und das strombegrenzende Element überbrückt wird.

Wird als strombegrenzendes Element beispielsweise ein ohmscher Widerstand der Größe 100 Ohm gewählt, so fließt bei einer Spannungsdifferenz von 10 Volt anfangs ein unkritischer Strom von 100 mA. Ohne diesen Widerstand würde bei einer Lithium-Batterie ein Ausgleichsstrom von 10000 A fließen, der nur durch den Innenwiderstand der Batterie von etwa 1mOhm begrenzt würde..

Unter dem Begriff "strombegrenzendes Element" werden im Folgenden aktive oder passive elektrische oder elektronische Bauelemente verstanden, die den von der Batterie zu einem der Batteriepole fließenden Strom im zeitlichen Mittel begrenzen. Dies kann insbesondere dadurch erfolgen, dass als strombegrenzendes Element ein ohmscher Widerstand verwendet wird oder dass der zeitlich gemittelte Strom mittels eines Pulsgebers, der den Stromfluss nur zeitweise zuläßt, begrenzt wird. Der maximale Strom kann im letzteren Fall über die Pulslänge und 1 oder über die Pulswiederholrate eingestellt werden.

Im Folgenden wird als strombegrenzendes Element meist beispielhaft ein ohmscher Widerstand genannt. Dem Fachmann ist aber klar, dass anstelle eines ohmschen Widerstands auch ein Pulsgeber, der den Strom nur zeitweise fließen lässt, verwendet werden kann.

Aus Sicherheitsgründen ist es weiter vorteilhaft, einen Hauptschalter vorzusehen, mit dem die Verbindung zwischen mindestens einem der Batteriepole, vorzugsweise dem Pluspol, und der oder den Batteriezellen unterbrochen werden kann.

Lithium-Mangan-Zellen werden bei Unterschreiten einer Grenzspannung von etwa 1 Volt unwiederbringlich zerstört. Es ist daher von Vorteil, die stromleitende Verbindung zwischen den Lithium-Mangan-Zellen und mindestens einem der Batteriepole zu unterbrechen, wenn die Klemmenspannung unter einen bestimmten Wert abfällt. Bei der oben genannten Ausführungsform der Erfindung mit Hauptschalter, wird dieser in diesem Fall geöffnet, um den Batteriepol komplett von den Lithium-Mangan-Zellen abtrennen zu können. Der Hauptschalter kann entweder in dem zu dem Überbrückungsschalter parallelen Zweig in Serie mit dem strombegrenzenden Element angeordnet sein oder in Reihe mit der Parallelschaltung aus Überbrückungsschalter und dem strombegrenzenden Element vorgesehen werden.

Der Hauptschalter ist von Vorteil sowohl manuell bedienbar als auch automatisch schaltbar, insbesondere wenn die Klemmenspannung unter einen vorbestimmten Wert abfällt und/oder wenn der Strom einen vorgegebenen Maximalwert übersteigt. Der Hauptschalter unterbricht in geöffneter Stellung die stromleitende Verbindung zwischen den Batteriezellen und zumindest einem der Batteriepole, vorzugsweise dem Pluspol, während er in geschlossener Stellung den Stromfluss erlaubt.

Die Erfindung eignet sich für Batterien mit hochstromfähigen Batteriezellen, insbesondere Lithium-Zellen. Bevorzugt werden Lithium-Mangan-Zellen in der Batterie vorgesehen. Lithium-Mangan-Zellen besitzen eine sehr hohe Energiedichte, so dass eine gewünschte Batteriekapazität mit minimalen Batterievolumen und minimalem Batteriegewicht realisiert werden kann. Gegenüber anderen Lithium-basierenden Batteriesystemen erfüllen Lithium-Mangan-Batterien wesentlich höhere Sicherheitsstandards. In Verbindung mit der erfindungsgemäßen Sicherheitsschaltung stellt die Erfindung damit ein sicheres Hochleistungs-Batteriemodul zur Verfügung.

Vorzugsweise umfasst die Sicherheitsschaltung eine Messeinrichtung zur Strommessung, welche über eine Eingangssignalleitung mit der Steuereinrichtung zusammenwirkt. Die Messeinrichtung ist vorzugsweise in die Batterie integriert und so geschaltet, dass diese einen Strom misst, der Rückschlüsse auf den über die Batteriepole fließenden Strom zulässt, insbesondere einen Strom, der proportional zu dem über die Batteriepole fließenden Strom ist. Der gemessene Stromwert wird über die Eingangssignalleitung an die Steuereinrichtung übermittelt, welche in Abhängigkeit von diesem Eingangssignal den Überbrückungsschalter und oder den Hauptschalter ansteuert.

Von Vorteil umfasst die Sicherheitsschaltung auch eine Messeinrichtung zur Messung der Batteriespannung, die in analoger Weise mit der Steuereinrichtung verbunden ist, so dass bei Über- oder Unterschreiten vorgegebener Grenzspannungen der Überbrückungsschalter und/oder der Hauptschalter ebenfalls angesteuert und geöffnet bzw. geschlossen werden können.

In einer bevorzugten Ausführung wird ständig der über die Batteriepole, in der Praxis der über den Pluspol der Batterie, fließende Strom gemessen. Dies kann beispielsweise dadurch erfolgen, dass in die Leitung zwischen den Batteriezellen und dem Pluspol ein Strommesswiderstand, ein sogenannter Shunt, geschaltet ist, und die über diesem Widerstand abfallende Spannung gemessen wird.

Wird bei dieser Messung ein vorgegebener Maximalstrom überschritten, so wird die stromleitende Verbindung zwischen zumindest einem der Batteriepole, in der Regel dem Pluspol, und den Batteriezellen unterbrochen. Dies kann bevorzugt dadurch erfolgen, dass der in dieser stromleitenden Verbindungsleitung angeordnete Hauptschalter geöffnet wird. Der Stromfluss wird dadurch unterbrochen.

Von Vorteil ist die Messeinrichtung so ausgeführt, dass diese außer dem über die Batteriepole fließenden Strom auch die Batteriespannung aufnehmen kann. Bei Über- oder Unterschreiten einer bestimmten, vorgegebenen Spannung werden in diesem Fall der Überbrückungsschalter und/oder der Hauptschalter ebenfalls von der Steuereinrichtung angesteuert.

So ist es beispielsweise günstig, beim Laden der Batterie die zwischen den Batteriepolen anliegende Spannung zu messen und bei Überschreiten einer vorgegebenen Spannung die stromleitende Verbindung zwischen zumindest einem der Batteriepole, in der Regel dem Pluspol, und den Batteriezellen zu unterbrechen. Zum Beispiel wird bei der Verwendung von Lithium-Mangan-Zellen der Stromfluss von Vorteil dann unterbrochen, wenn die Spannung einen Wert überschreitet, der der Anzahl in Serie geschalteter Lithium-Mangan-Zellen multipliziert mit 4,2. V entspricht, um ein Überladen der Batterie zu vermeiden.

Bei Unterschreiten einer bestimmten Spannung können manche Batteriezellen, beispielsweise Lithium-Zellen, zerstört werden. Von Vorteil wird daher die zwischen den Batteriepolen anliegende Spannung überwacht und bei Unterschreiten eines bestimmten Wertes die stromleitende Verbindung zwischen zumindest einem der Batteriepole und den Batteriezellen unterbrochen. Für Batterien mit Lithium-Mangan-Zellen hat es sich insofern bewährt, den Hauptschalter zu öffnen, wenn die Spannung pro Zelle einen Wert von 2 Volt unterschreitet Sind zum Beispiel 7 Lithium-Mangan-Zellen jeweils in Serie geschaltet, um eine Nennspannung von 7 x 3,7 V = 25,9 V zu erzielen, so wird entsprechend eine Spannungsuntergrenze von 7 x 2 V = 14 V festgelegt. Sinkt die Klemmenspannung der Batterie unter diesen Wert, so wird der Hauptschalter automatisch geöffnet.

Die Erfindung bringt insbesondere bei frei zugänglichen, das heißt nicht fest in eine bestimmte Anlage oder Vorrichtung eingebauten Batterien Vorteile. Bei solchen Batterien besteht die Gefahr, dass der Benutzer auch Verbraucher an die Batterie anschließt, für die die Batterie nicht ausgelegt ist, oder die Batterie unsachgemäß mit einer zweiten Batterie parallel schaltet.

Ohne die erfindungsgemäßen Sicherheitsmerkmale können insbesondere bei Lithium-basierenden Batterien, beispielsweise Batterien mit Lithium-Mangan-Zellen, ungewollt sehr hohe Ströme fließen. Insbesondere bei Batterien, die eine Kapazität von mehr als 200 Wh und mehr besitzen, bringt die Erfindung enorme Sicherheitsvorteile. Diese Vorteile sind bei großen Batterien mit mehr als 500 Wh, bevorzugt mehr als 1000 Wh Kapazität, von wesentlicher Bedeutung. Bevorzugt wird die Erfindung bei Batterien eingesetzt, die zwischen 4 und 12 in Serie geschaltete Lithium-Mangan-Zellen und mehr als 10 parallel geschaltete Lithium-Mangan-Zellen aufweist.

Die erfindungsgemäße Batterie eignet sich besonders zur Versorgung von Elektro-Bootsmotoren. Vor allem bei begrenztem Volumen und Gewicht im Boot ist die hohe Energiedichte von Lithium-Batterien ein entscheidender Vorteil. Wird der Elektromotor nur als Hilfsmotor oder nur bei speziellen Fahrten eingesetzt, so kann die erfindungsgemäße Batterie in einfacher Weise auch von Laien montiert oder demontiert werden. Als Versorgungssystem für Elektro-Bootsmotoren werden mit der Erfindung die Vorteile von Lithium-Batterien erreicht, nämlich hohe Energiedichte, hohe Stromfestigkeit, hohe Ladungsstabilität auch bei längerer Lagerung, bessere Leistung bei Kälte und, bei Verwendung von Lithium-Mangan-Batterien, hohe Sicherheitsstandards. Zusätzlich ermöglicht die Erfindung ein einfaches und sicheres Ein- und Ausbauen der Batterie, auch durch Nicht-Fachleute, was insbesondere beim Einsatz einer solchen Batterie zur Stromversorgung eines Boots-Hilfsantriebs von Vorteil ist.

Die Erfindung bietet weiterhin Schutz gegen eine unsachgemäße Reihenschaltung zweier Lithium-Batterien. Wird eine voll geladene Lithium-Mangan-Zelle mit einer Klemmenspannung von 4,2 V mit einer nur noch teilweise geladenen Lithium-Mangan-Zelle mit einer Klemmenspannung von z.B. nur noch 2 V in Reihe geschaltet und ein Verbraucher angeschlossen, so kann sich die nur teilweise geladene Zelle bis zur Selbstzerstörung entladen.

Erfindungsgemäß wird daher die Klemmenspannung der Batterie überwacht und die stromleitende Verbindung zwischen den Lithium-Zellen und dem Batteriepol unterbrochen, wenn die Klemmenspannung zu stark absinkt und eine Zerstörung der Batterie droht. Bei einer Serienschaltung zweier erfindungsgemäßer, ungleichmäßig geladener Batterien wird auf diese Weise der Stromfluss rechtzeitig unterbrochen, bevor die Lithium-Zellen einer der Batterien geschädigt werden. Es besteht dann gegebenenfalls noch die Möglichkeit, die entladene Batterie abzuklemmen und den elektrischen Verbraucher mit nur einer Batterie zu versorgen.

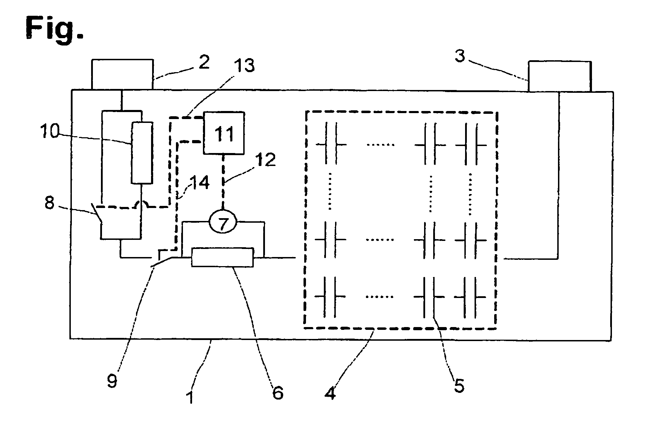

Die Erfindung sowie weitere Einzelheiten der Erfindung werden im Folgenden anhand von dem in der Zeichnung dargestellten Ausführungsbeispiel näher erläutert. Hierbei zeigt die
- Figur: eine erfindungsgemäße Batterie.

In der Figur ist eine Batterie 1 mit einem Pluspol 2 und einem Minuspol 3 dargestellt. Die Batterie 1 umfasst einen Zellenblock 4 mit zum Teil in Reihe, zum Teil parallel geschalteten Lithium-Mangan-Zellen 5.

Zwischen dem Block 4 mit den Lithium-Mangan-Zellen 5 und dem Pluspol 2 ist erfindungsgemäß eine Sicherheitsschaltung vorgesehen. Hierzu ist einem Widerstand 6 ein Messgerät 7 parallel geschaltet, mit dem die über dem Widerstand 6 abfallende Spannung, die proportional zu dem durch den Widerstand 6 fließenden Strom ist, gemessen werden kann.

In Reihe mit dem Widerstand 6 sind ein Hauptschalter 9 und ein Überbrückungsschalter 8 vorgesehen, wobei letzterem ein Widerstand 10 parallel geschaltet ist. Die Parallelschaltung aus dem Überbrückungsschalter 8 und dem Widerstand 10 ist an den Pluspol 2 angeschlossen.

Weiter ist ein Controller 11 vorgesehen, der als Eingangssignal 12 den von dem Messgerät 7 ermittelten Spannungsabfall erhält. Der Controller 11 kann über eine Signalleitung 13 den Überbrückungsschalter 8 und über eine Signalleitung 14 den Hauptschalter 9 ansteuern.

Der Überbrückungsschalter 8 und der Hauptschalter 9 sind so gekoppelt, dass der Überbrückungsschalter 8 immer dann öffnet, wenn der Hauptschalter 9 geöffnet wird. Ist die Batterie 1 von allen Verbrauchern abgeklemmt, so sind der Überbrückungsschalter 8 und der Hauptschalter 9 daher zunächst geöffnet.

Nach dem Anschluss eines Verbrauchers an die Batterie 1, wird der Hauptschalter 9 geschlossen. Solange der Verbraucher, beispielsweise ein Motor, nicht eingeschaltet ist, sollte über den Messwiderstand 6 kein Strom fließen. Dies wird von dem Controller 11 geprüft, der ein Eingangssignal von dem Messgerät 7 erhält. Ist der über den Messwiderstand 6 fließende Strom geringer als ein vorgegebener Minimalstrom, so sendet der Controller 11 ein Signal an den Überbrückungsschalter 8, um diesen zu schließen und so den Widerstand 10 zu überbrücken.

Fließt dagegen über den Messwiderstand 6 ein größerer Strom als der vorgegebene Minimalstrom, so bleibt der Überbrückungsschalter 8 geöffnet. Dies kann insbesondere der Fall sein, wenn zwei ungleich stark geladene Batterien parallel geschaltet werden. Der Ausgleichsstrom fließt dann erfindungsgemäß über den strombegrenzenden Widerstand 10. Erst wenn der Ausgleichsstrom unter den vorgegebenen Minimalstrom gesunken ist, wird der Überbrückungsschalter 8 geschlossen.

Der Controller 11 überwacht durch Messung des Spannungsabfalls über dem Widerstand 6 ständig den von der Batterie 1 abgegebenen Strom. Solange dieser Strom einen vorgegebenen Maximalwert nicht übersteigt, sendet der Controller 11 an den Hauptschalter 9 ein Signal, um diesen in der Stellung "geschlossen" zu halten, so dass im Normalbetrieb der Strom ungehindert über den Überbrückungsschalter 9 und den geschlossenen Überbrückungsschalter 8 zum Pluspol 2 fließen kann.

Stellt der Controller 11 fest, dass der für die Stromstärke vorgegebene Wert überschritten wird, so wird an den Hauptschalter 9 das Signal "Öffnen" gesendet und der Stromfluss damit unterbrochen.

Wird der Hauptschalter 9, beispielsweise nach Behebung eines Fehlers, anschließend wieder geschlossen, so wird zunächst, wie oben beschrieben, überprüft, ob unzulässig hohe Ausgleichs- oder andere Fehlströme fließen, bevor der Überbrückungsschalter 8 geschlossen und der Widerstand 10 überbrückt werden.

Der Controller 11 verfügt außerdem über einen Eingang 15, an den eine nicht dargestellte Messeinrichtung zur Messung der Klemmenspannung der Batterie 1 angeschlossen ist. Über- oder unterschreitet die Klemmenspannung vorgegebene Grenzwerte, so steuert der Controller 11 den Überbrückungsschalter 8 und / oder den Hauptschalter 9 an, um diese nach Bedarf zu öffnen oder zu schließen.

Im Folgenden werden die unterschiedlichen Funktionen der erfindungsgemäßen Sicherheitsschaltung am Beispiel einer aus Lithium-Mangan-Zellen 5 aufgebauten Batterie 1 mit 37 V Nennspannung und einer Kapazität von 58 Ah erläutert. In der Batterie 1 sind je 10 Lithium-Mangan-Zellen 5 in Serie und 36 Zellen 5 parallel geschaltet. Die Ladeendspannung dieser Batterie 1 beträgt 42 V.

Beim Laden der Batterie 1 wird das Ladegerät an die Pole 2, 3 angeschlossen und der Ladevorgang gestartet. Der Überbrückungsschalter 8 ist in dieser Phase geschlossen, so dass der Ladestrom über die Zellen 4 fließen kann. Über den Eingang 15 erfasst der Controller 11 ständig die aktuelle Klemmenspannung der Batterie 1. Wird die Ladeendspannung von 42 V erreicht, sendet der Controller 11 ein Signal an Hauptschalter 9, so dass dieser geöffnet und damit der Ladevorgang abgebrochen wird.

Im normalen Betrieb ist an die Pole 2, 3 der Batterie 1 ein Stromverbraucher angeschlossen. Mit zunehmender Entladung der Batterie 1 sinkt auch deren Klemmenspannung ab. Die Klemmenspannung wird wiederum von dem Controller 11 überwacht. Fällt die Spannung unter 20 V, das heißt die Spannung der einzelnen Zellen 4 unterschreitet 2,0 V, so werden die Überbrückungsschalter 8 und 9 geöffnet und die Batterie 1 abgeklemmt, um eine Schädigung der Zellen 4 zu verhindern.

Wird die Batterie 1 im teilentladenen Zustand in unsachgemäßer Weise mit einer voll geladenen Batterie gleichen Typs parallel geschaltet, so fließt nach Schließen des Hauptschalters 9 aufgrund der unterschiedlichen Klemmenspannung beider Batterien ein Ausgleichsstrom. Die Batterie 1 könnte beispielsweise eine Klemmenspannung von 27 V aufweisen, während die andere Batterie im geladenen Zustand die Nennspannung von 37 V besitzt. Ohne die erfindungsgemäße Sicherheitsschaltung könnte in dieser Situation ein Ausgleichsstrom von bis zu 10000 A fließen, da der Innenwiderstand der Batterien nur etwa 1 mOhm beträgt

Wie oben bereits ausgeführt, ist der Überbrückungsschalter 8 in dieser Situation zunächst geöffnet. Der Ausgleichsstrom fließt daher über den Widerstand 10. Der Widerstand 10 hat zum Beispiel einen Widerstand von 100 Ohm, wodurch der Ausgleichsstrom auf 100 mA begrenzt wird. Erst wenn der Ausgleichsstrom auf einen vorgegebenen Minimalwert abgefallen ist, wird der Überbrückungsschalter 8 geschlossen und so der Widerstand 10 überbrückt.

## Patentansprüche

1. Batterie mit mindestens einer Batteriezelle (4), mit zwei Batteriepolen (2, 3) und stromleitenden Verbindungen zwischen der oder den Batteriezellen (4) und den Batteriepolen (2, 3), **dadurch gekennzeichnet, dass** eine Sicherheitsschaltung (6, 7, 8, 9, 10, 11) vorgesehen ist, welche in der Verbindung zwischen der oder den Batteriezellen (4) und einem der Batteriepole (2, 3) ein strombegrenzendes Element (10) aufweist und wobei parallel zu dem strombegrenzenden Element (10) ein Überbrückungsschalter (8) angeordnet ist, und wobei eine Steuereinrichtung (11) vorgesehen ist, welche den Überbrückungsschalter (8) schließt, wenn der zwischen der oder den Batteriezellen (4) und einem der Batteriepole (2, 3) fließende Strom einen vorgegebenen Minimalstrom unterschreitet.

2. Batterie nach Anspruch 1, **dadurch gekennzeichnet, dass** in der Verbindung zwischen der oder den Batteriezellen (4) und einem der Batteriepole (2, 3) ein Hauptschalter (9) vorgesehen ist.

3. Batterie nach Anspruch 2, **dadurch gekennzeichnet, dass** die Steuereinrichtung (11) den Hauptschalter (9) oder den Überbrückungsschalter (8) öffnet, wenn der zwischen der oder den Batteriezellen (4) und einem der Batteriepole (2, 3) fließende Strom einen vorgegebenen Maximalwert überschreitet.

4. Batterie nach einem der Ansprüche 2 oder 3, **dadurch gekennzeichnet, dass** der Überbrückungsschalter (8) mit dem Hauptschalter (9) in Wirkverbindung steht, so dass der Überbrückungsschalter (8) öffnet, wenn der Hauptschalter (9) geöffnet ist.

5. Batterie nach einem der Ansprüche 1 bis 4, **dadurch gekennzeichnet, dass** die Batteriezelle(n) (4) als Lithium-Zellen, vorzugsweise als Lithium-Mangan-Zellen, ausgeführt sind.

6. Batterie nach einem der Ansprüche 1 bis 5, **dadurch gekennzeichnet, dass** mehrere in Serie und / oder parallel geschaltete Batteriezellen (4), insbesondere Lithium-Mangan-Zellen, vorgesehen sind.

7. Batterie nach Anspruch 5, **dadurch gekennzeichnet, dass** zwischen 4 und 12 Lithium-Mangan-Zellen in Serie und / oder mehr als 10 Lithium-Mangan-Zellen parallel geschaltet sind.

8. Batterie nach einem der Ansprüche 1 bis 7, **dadurch gekennzeichnet, dass** die Sicherheitsschaltung eine Einrichtung (6, 7) zur Strom- und / oder Spannungsmessung umfasst

9. Batterie nach einem der Ansprüche 1 bis 8, **dadurch gekennzeichnet, dass** der Überbrückungsschalter (8) und / oder der Hauptschalter (9) in der Verbindung zwischen dem Pluspol (2) der Batterie (1) und den Batteriezellen (4) angeordnet sind.

10. Verwendung einer Batterie nach einem der Ansprüche 1 bis 9 als Stromversorgung für ein Elektroboot.

## Claims

1. Battery having at least one battery cell (4), having two battery poles (2, 3) and electrically conductive connections between the battery cell or cells (4) and the battery poles (2, 3), **characterized in that** a safety circuit (6, 7, 8, 9, 10, 11) is provided and has a current-limiting element (10) in the connection between the battery cell or cells (4) and one of the battery poles (2, 3), and with a bridging switch (8) being arranged in parallel with the current-limiting element (10), and with a control device (11) being provided which closes the bridging switch (8) when the current flowing between the battery cell or cells (4) and one of the battery poles (2, 3) is less than a predetermined minimum current.

2. Battery according to Claim 1, **characterized in that** a main switch (9) is provided in the connection between the battery cell or cells (4) and one of the battery poles (2, 3).

3. Battery according to Claim 2, **characterized in that** the control device (11) opens the main switch (9) or the bridging switch (8) when the current flowing between the battery cell or cells (4) and one of the battery poles (2, 3) is greater than a predetermined maximum value.

4. Battery according to one of Claims 2 or 3, **characterized in that** the bridging switch (8) is operatively connected to the main switch (9) such that the bridging switch (8) is open when the main switch (9) is open.

5. Battery according to one of Claims 1 to 4, **characterized in that** the battery cell or cells (4) is or are in the form of lithium cells, preferably lithium-manganese cells.

6. Battery according to one of Claims 1 to 5, **characterized in that** a plurality of battery cells (4) are provided, in particular lithium-manganese cells, and are connected in series and/or in parallel.

7. Battery according to Claim 5, **characterized in that** between four and twelve lithium-manganese cells are connected in series and/or more than ten lithium-manganese cells are connected in parallel.

8. Battery according to one of Claims 1 to 7, **characterized in that** the safety circuit has a device (6, 7) for current and/or voltage measurement.

9. Battery according to one of Claims 1 to 8, **characterized in that** the bridging switch (8) and/or the main switch (9) are/is arranged in the connection between the positive pole (2) of the battery (1) and the battery cells (4).

10. Use of a battery according to one of Claims 1 to 9 as an electrical power supply for an electric boat.

## Revendications

1. Batterie comprenant au moins une cellule de batterie (4), comprenant deux bornes de batterie (2, 3) et des liaisons électriquement conductrices entre la ou les cellules de batterie (4) et les bornes de batterie (2, 3), **caractérisée en ce qu'**il est prévu un circuit de sécurité (6, 7, 8, 9, 10, 11) qui présente un élément limiteur de courant (10) dans la liaison entre la ou les cellules de batterie (4) et l'une des bornes de batterie (2, 3) et un commutateur de court-circuit (8) étant monté en parallèle avec l'élément limiteur de courant (10), un dispositif de commande (11) étant prévu, lequel ferme le commutateur de court-circuit (8) lorsque le courant qui circule entre la ou les cellules de batterie (4) et l'une des bornes de la batterie (2, 3) devient inférieur à un courant minimal prédéfini.

2. Batterie selon la revendication 1, **caractérisée en ce qu'**un interrupteur général (9) est prévu dans la liaison entre la ou les cellules de batterie (4) et l'une des bornes de batterie (2, 3).

3. Batterie selon la revendication 2, **caractérisée en ce que** le dispositif de commande (11) ouvre l'interrupteur général (9) ou le commutateur de court-circuit (8) lorsque le courant qui circule entre la ou les cellules de batterie (4) et l'une des bornes de la batterie (2, 3) dépasse une valeur maximale prédéfinie.

4. Batterie selon l'une des revendications 2 ou 3, **caractérisée en ce que** le commutateur de court-circuit (8) est en liaison active avec l'interrupteur général (9) de sorte que le commutateur de court-circuit (8) s'ouvre lorsque l'interrupteur général (9) est ouvert.

5. Batterie selon l'une des revendications 1 à 4, **caractérisée en ce que** la ou les cellules de batterie (4) sont réalisées sous la forme de cellules au lithium, de préférence sous la forme de cellules au lithium-manganèse.

6. Batterie selon l'une des revendications 1 à 5, **caractérisée en ce que** plusieurs cellules de batterie (4), notamment des cellules au lithium-manganèse, branchées en série et/ou en parallèle sont prévues.

7. Batterie selon la revendication 5, **caractérisée en ce qu'**entre 4 et 12 cellules au lithium-manganèse sont branchées en série et/ou plus de 10 cellules au lithium-manganèse sont branchées en parallèle.

8. Batterie selon l'une des revendications 1 à 7, **caractérisée en ce que** le circuit de sécurité comprend un dispositif (6, 7) de mesure du courant et/ou de la tension.

9. Batterie selon l'une des revendications 1 à 8, **caractérisée en ce que** le commutateur de court-circuit (8) et/ou l'interrupteur général (9) sont disposés dans la liaison entre la borne positive (2) de la batterie (1) et les cellules de batterie (4).

10. Utilisation d'une batterie selon l'une des revendications 1 à 9 comme alimentation électrique pour un bateau électrique.
